# EUROPÄISCHE PATENTSCHRIFT

(11) **EP 2 951 658 B1**
(45) Veröffentlichungstag und Bekanntmachung des Hinweises auf die Patenterteilung: **02.10.2019**
(21) Anmeldenummer: 14700245.5
(22) Anmeldetag: 08.01.2014
(51) Int. Cl.: G05G 5/03, G05G 1/44, B60K 26/02

(54) **FAHRPEDALEINHEIT**
ACCELERATOR PEDAL UNIT
UNITÉ DE PÉDALE D'ACCÉLÉRATEUR

(30) Priorität: 29.01.2013 DE 102013201378; 26.03.2013 DE 102013205281
(43) Veröffentlichungstag der Anmeldung: 09.12.2015
(73) Patentinhaber: Robert Bosch GmbH, 70442 Stuttgart (DE)
(72) Erfinder: KLESTIL, Pavel, 37006 Srubec (CZ)
(86) Internationale Anmeldenummer: PCT/EP2014/050196
(87) Internationale Veröffentlichungsnummer: WO 2014/117965

(56) Entgegenhaltungen:
- DE-A1- 10 250 456
- DE-A1-102010 029 199

## Beschreibung

### Stand der Technik

Die Erfindung geht aus von einer Fahrpedaleinheit nach der Gattung des Hauptanspruchs.

Es ist schon eine Fahrpedaleinheit aus der DE 10 2009 021 585 A1 bekannt, mit einem Fahrpedal, einem Aktuator und einer Steuerwelle, über die der Aktuator ein rückstellendes Drehmoment auf das Fahrpedal übertragen kann. Die Fahrpedaleinheit kann eine zusätzliche Rückstellkraft auf das Fahrpedal erzeugen, beispielsweise um die Geschwindigkeit eines Fahrzeugs zu regeln, zu begrenzen oder als Warneinrichtung bei einer Geschwindigkeitsüberschreitung zu fungieren. Nachteilig ist, dass der Aktuator und das Fahrpedal starr miteinander gekoppelt sind. Dadurch werden kurzzeitige Momenteneinbrüche des Aktuators, beispielsweise eines bürstenbehafteten Gleichstrommotors (Torque-Ripple) in ihrer relativen Größe unverändert auf das Fahrpedal übertragen und sind für den Fahrer störend spürbar. Ein weiterer Nachteil ist, dass die vom Aktuator erzeugte zusätzliche Rückstellkraft durch verschiedene Effekte nicht kontrollierbaren Schwankungen unterliegt. Zum einen kann es bei einer schnellen Pedalbetätigung durch gekoppeltes Mitbewegen des Aktuators trägheitsbedingt zu einer unerwünschten Erhöhung der Rückstellkraft kommen. Zum anderen ist der mechanische Übertragungspfad reibungsbehaftet, so dass die tatsächlich auf das Fahrpedal übertragene Kraft von der Temperatur abhängig ist. Auch die Beziehung zwischen dem erzeugten Motormoment und dem am Aktuator angelegten Strom unterliegt nicht vorhersagbaren Schwankungen, die von der Temperatur und Werkstoff- und Bauteiltoleranzen abhängen.

Aus der DE 10 2010 029 199 A1 ist ein Fahrpedal für Kraftfahrzeuge bekannt.

Aus der DE 102 50 456 A1 ist eine Vorrichtung mit zusätzlicher Rückstellkraft für ein Gaspedal bekannt.

### Vorteile der Erfindung

Die erfindungsgemäße Fahrpedaleinheit mit den kennzeichnenden Merkmalen des Hauptanspruchs hat demgegenüber den Vorteil, dass der Aktuator von dem Fahrpedal mechanisch entkoppelt ist, indem das Drehmoment der Steuerwelle über ein Dämpfungselement auf das Fahrpedal übertragen wird. Auf diese Weise ist mechanisch gesehen zwischen der Steuerwelle und dem Fahrpedal ein Feder- bzw. Dämpfungselement angeordnet. Durch das Dämpfungselement werden auftretende Drehmomentschwankungen des Aktuators stark gedämpft, so dass diese vom Fahrer nicht wahrnehmbar sind.

Durch die in den Unteransprüchen aufgeführten Maßnahmen sind vorteilhafte Weiterbildungen und Verbesserungen der im Hauptanspruch angegebenen Fahrpedaleinheit möglich.

Gemäß einer vorteilhaften Ausführung ist das Dämpfungselement als Schraubenfeder, Torsionsfeder, Biegefeder oder Gummifeder ausgebildet.

Erfindungsgemäß ist auf der Steuerwelle ein das Drehmoment übertragender Steuerhebel vorgesehen wobei das Dämpfungselement an einem Ende mit dem Steuerhebel und an dem anderen Ende mit der Steuerwelle verbunden ist.

Weiterhin vorteilhaft ist, wenn der Steuerhebel auf der Steuerwelle drehbar gelagert ist, da das rückstellende Drehmoment auf diese Weise ausschließlich über das Dämpfungselement übertragen wird.

Sehr vorteilhaft ist es, wenn das Dämpfungselement mit seinem der Steuerwelle zugeordneten Ende an einer mit der Steuerwelle verbundenen Schulter befestigt ist, da das Dämpfungselement auf diese Weise besonders einfach an der Steuerwelle befestigbar ist.

Auch vorteilhaft ist, wenn das Dämpfungselement mit zumindest einer Windung um die Steuerwelle herum verläuft, da das Dämpfungselement auf diese Weise sehr platzsparend angeordnet ist.

Desweiteren vorteilhaft ist, wenn der Steuerhebel ein drehbar gelagertes Rollelement aufweist, da das Drehmoment auf diese Weise mit wenig Reibung vom Steuerhebel auf das Fahrpedal übertragen wird.

Darüber hinaus vorteilhaft ist, wenn der Steuerhebel auf eine Fläche des Fahrpedals einwirkt, die mit einer Beschichtung versehen ist, da das Drehmoment auf diese Weise nahezu reibungslos und geräuscharm vom Steuerhebel auf das Fahrpedal übertragen wird.

Erfindungsgemäß ist eine Stellfeder vorgesehen, die mit ihrem einen Ende an einem drehfesten Gehäuseabschnitt befestigt ist und mit dem anderen Ende auf den Steuerhebel wirkt. Unabhängig von ihrer Wirkrichtung sorgt die Stellfeder für eine Verspannung eines zwischen dem Aktuator und dem Fahrpedal angeordneten Getriebes, so dass die Zahnflanken der Zähne des Getriebes aneinander anliegen und dadurch wenig Geräusche im Betrieb des Getriebes entstehen.

Außerdem vorteilhaft ist, wenn dass die Stellfeder derart ausgeführt ist, dass sie den Steuerhebel an das Fahrpedal oder in entgegengesetzter Richtung in eine vom Fahrpedal beabstandete Anschlagposition drückt. Gemäß der ersten Alternative wirkt die Stellfeder als Rückstellfeder entgegen die Federkraft des Dämpfungselementes. Gemäß der zweiten Alternative wirkt die Stellfeder in Richtung des Dämpfungselementes und sorgt für ein ständiges Anliegen des Steuerhebels am Fahrpedal, wodurch der Aktuator besonders schnell eine Kraft in das Fahrpedal einleiten kann.

Weiter vorteilhaft ist, wenn das Dämpfungselement und die Stellfeder jeweils auf einer auf der Steuerwelle drehbar gelagerten Lagerbuchse vorgesehen sind, da die Federn auf diese Weise gut geführt sind und bei einer mechanischen Belastung nicht undefiniert ausbrechen können.

### Zeichnung

Ein Ausführungsbeispiel der Erfindung ist in der Zeichnung vereinfacht dargestellt und in der nachfolgenden Beschreibung näher erläutert.
- Fig.1: zeigt eine erfindungsgemäße Fahrpedaleinheit in einer dreidimensionalen Ansicht und
- Fig.2: eine Ansicht von oben auf die erfindungsgemäße Fahrpedaleinheit nach Fig.1.

### Beschreibung des Ausführungsbeispiels

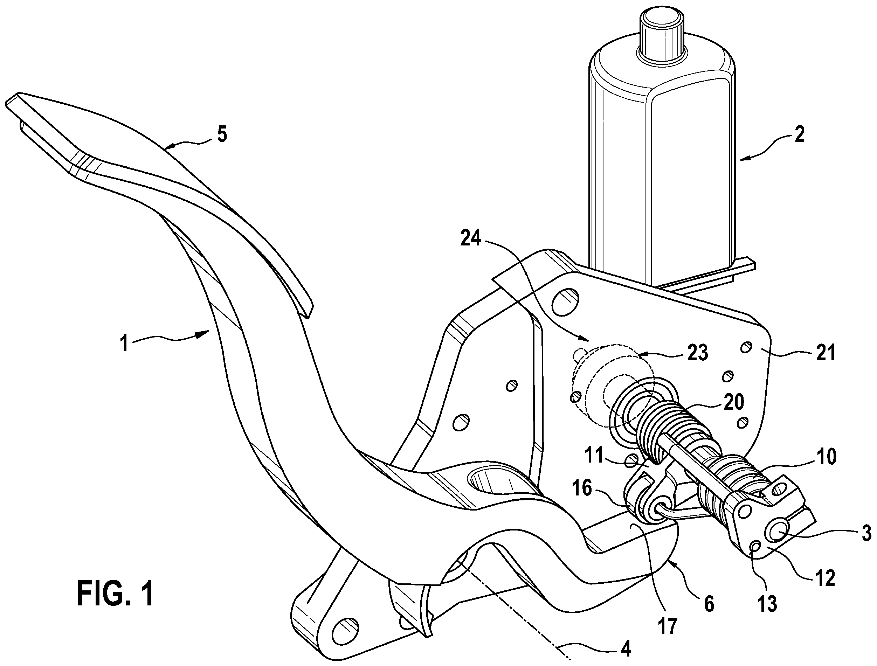

Fig.1 zeigt eine erfindungsgemäße Fahrpedaleinheit in einer dreidimensionalen Ansicht.

Die erfindungsgemäße Fahrpedaleinheit weist ein drehbar gelagertes Fahrpedal 1, einen Aktuator 2 und eine Steuerwelle 3 auf, über die der Aktuator 2 ein rückstellendes Drehmoment auf das Fahrpedal 1 übertragen kann. Auf diese Weise kann die Fahrpedaleinheit Funktionen übernehmen, wie beispielsweise die Geschwindigkeit aktiv zu begrenzen oder auf Geschwindigkeitsüberschreitungen hinzuweisen.

Das Fahrpedal 1 ist um eine Drehachse 4 drehbar gelagert und hat einen ersten Hebelarm 5 zur Betätigung mit dem Fuß und einen zweiten Hebelarm 6 zur Betätigung durch den Aktuator 2. Der erste Hebelarm 5 und der zweite Hebelarm 6 liegen bezüglich der Drehachse 4 auf einander gegenüberliegenden Seiten. Der Aktuator 2 ist beispielsweise ein Gleichstrommotor, DC-Motor oder bürstenloser Motor.

Die Steuerwelle 3 ist drehbar gelagert, beispielsweise in zumindest einem Drehlager.

Erfindungsgemäß ist vorgesehen, dass das Drehmoment der Steuerwelle 3 über ein Dämpfungselement 10 auf das Fahrpedal 1 übertragen wird. Auf diese Weise übt die Steuerwelle 3 bei bestromtem Aktuator 2 eine vorbestimmte Rückstellkraft auf das Fahrpedal 1 aus. Das Dämpfungselement 10 ist gemäß dem Ausführungsbeispiel als Schraubenfeder ausgebildet, kann aber auch eine Torsionsfeder, Biegefeder oder Gummifeder sein. Bei der Ausführung als Schraubenfeder verläuft das Dämpfungselement 10 mit zumindest einer Windung um die Steuerwelle 3 herum, ist also auf der Steuerwelle 3 angeordnet und gelagert. Gemäß dem Ausführungsbeispiel weist das Dämpfungselement 10 eine Federsteifigkeit im Bereich zwischen 30 Nmm/Grad und 80 Nmm/Grad auf. Das Dämpfungselement 10 verläuft bei einer Schraubenfeder gewindeförmig bzw. helixförmig herum.

Auf der Steuerwelle 3 ist ein das Drehmoment auf das Fahrpedal 1 übertragender Steuerhebel 11 vorgesehen, wobei das Dämpfungselement 10 an einem Ende mit dem Steuerhebel 11 und an dem anderen Ende mit der Steuerwelle 3 verbunden ist. Gemäß dem Ausführungsbeispiel ist das Dämpfungselement 10 an dem anderen Ende mit der Steuerwelle 3 verbunden. Der Steuerhebel 11 ist auf der Steuerwelle 3 drehbar gelagert angeordnet, beispielsweise indem die Steuerwelle 3 den Steuerhebel durch eine Öffnung durchragt. Auf diese Weise wird erreicht, dass das Drehmoment ausschließlich über das Dämpfungselement 10 und nicht unmittelbar von der Steuerwelle 3 auf das Fahrpedal 1 übertragen wird.

Das Dämpfungselement 10 ist mit seinem dem Steuerhebel 11 zugeordneten Ende beispielsweise in eine Öffnung des Steuerhebels 11 eingesteckt oder in einer Aufnahme eingehakt. Mit seinem der Steuerwelle 3 zugeordneten Ende ist das Dämpfungselement 10 beispielsweise an einer mit der Steuerwelle 3 drehfest verbundenen Schulter 12 bzw. einem mit der Steuerwelle 3 drehfest verbundenen Hebelarm 12 befestigt. Die Schulter bzw. der Hebelarm 12 ist gemäß dem Ausführungsbeispiel ein separates scheibenförmiges oder plattenförmiges Bauteil, das drehfest auf der Steuerwelle 3 befestigt ist, beispielsweise formschlüssig und kraftschlüssig. Selbstverständlich kann die Schulter 12 aber auch stoffschlüssig mit der Steuerwelle 3 verbunden sein. Die Schulter 12 kann auch entfallen und das Dämpfungselement 10 unmittelbar an der Steuerwelle 3 befestigt werden. Das Dämpfungselement 10 ist mit seinem der Schulter 12 zugewandten Ende beispielsweise in eine Öffnung 13 der Schulter 12 eingesteckt oder in einer Aufnahme eingehakt. An dem Steuerhebel 11 kann ein drehbar gelagertes Rollelement 16 vorgesehen sein, das auf eine Fläche des zweiten Hebelarms 6 des Fahrpedals 1 wirkt. Die Fläche 17 kann mit einer vorbestimmten Beschichtung versehen ist, um die Reibung zwischen der Fläche 17 des Fahrpedals 1 und dem Rollelement 16 des Steuerhebels 11 zu vermindern.

Es ist eine Stellfeder 20 vorgesehen, die mit ihrem einen Ende an einem drehfesten Gehäuseabschnitt 21 befestigt ist und mit dem anderen Ende auf den Steuerhebel 11 wirkt. Die Stellfeder 20 ist wie das Dämpfungselement 10 beispielsweise auf der Steuerwelle 3 angeordnet und beispielsweise als Schraubenfeder oder Spiralfeder ausgeführt. Die Stellfeder 20 verläuft bei einer Schraubenfeder gewindeförmig bzw. helixförmig und bei einer Spiralfeder spiralförmig um die Steuerwelle 3 herum. Die Spiralfeder benötigt besonders wenig Bauraum in axialer Richtung bezüglich der Steuerwelle 3. An der Stellfeder 20 kann ein nicht dargestelltes geräusch- und/oder schwingungsdämpfendes Element vorgesehen sein, das an der Stellfeder 20 anliegt.

Der Gehäuseabschnitt 21 ist beispielsweise durch einen sogenannten Lagerbock gebildet, mit dem die Fahrpedaleinheit an einem Fahrzeug befestigt wird. Die Stellfeder 20 kann derart ausgeführt sein, dass sie den Steuerhebel 11 entweder an das Fahrpedal 1 oder in entgegengesetzter Richtung in eine vom Fahrpedal 1 beabstandete Anschlagposition drückt. Gemäß der ersten Alternative wirkt die Stellfeder 20 als Rückstellfeder entgegen die Federkraft des Dämpfungselementes 10. Gemäß der zweiten Alternative wirkt die Stellfeder 10 in Richtung des Dämpfungselementes 10 und sorgt für ein ständiges Anliegen des Steuerhebels 11 am Fahrpedal 1, wodurch der Aktuator 2 besonders schnell eine Kraft in das Fahrpedal 1 einleiten kann. In beiden Fällen ist die Stellfeder 20 mit einer elastischen Vorspannung eingebaut. Die Stellfeder 20 ist beispielsweise mit ihrem einen Ende in eine Öffnung des Gehäuseabschnitts 21 eingesteckt und liegt mit dem anderen Ende unter Vorspannung stehend beispielsweise lose an dem Steuerhebel 11 an.

Das Dämpfungselement 10 und die Stellfeder 20 können jeweils auf einer auf der Steuerwelle 3 drehbar gelagerten Lagerbuchse 22 angeordnet sein. Die Lagerbuchse der Stellfeder 20 kann auch einstückig mit dem Steuerhebel 11 ausgeführt sein. Die Lagerbuchse 22 kann jeweils auch entfallen und der Durchmesser der Steuerwelle 3 derart ausgeführt werden, dass die Steuerwelle 3 selbst die Führung und Lagerung der Feder 10,20 übernimmt.

Weiterhin ist zwischen dem Aktuator 2 und der Steuerwelle 3 ein Getriebe 24 vorgesehen, das die Drehbewegung des Aktuators 2 mit einer vorbestimmten Untersetzung überträgt. Unabhängig von ihrer Wirkrichtung sorgt die Stellfeder 20 für eine Verspannung des Getriebes 24, so dass es zu keinem Flankenwechsel im Getriebe 24 kommt. Das Getriebe 24 ist dadurch sehr leise.

Das Getriebe 24 ist beispielsweise ein Stirnradgetriebe oder ein Schneckengetriebe, wobei das Schneckengetriebe selbsthemmend oder nicht selbsthemmend ausgeführt sein kann. Das Dämpfungselement 10 ist derart ausgebildet, dass das Fahrpedal 1 bei einer Blockade des Getriebes 24 noch mindestens um 5 Grad verstellbar ist, um einen Notfahrbetrieb zu ermöglichen. Das Dämpfungselement 10 darf also innerhalb dieser mindestens 5 Grad nicht auf Block gehen. Bei einer Betätigung des Fahrpedals 1 und einer Blockade des Getriebes 24 wird vom Fahrpedal 1 ein Drehmoment auf das Dämpfungselement 10 ausgeübt, so dass diese elastisch verformt wird.

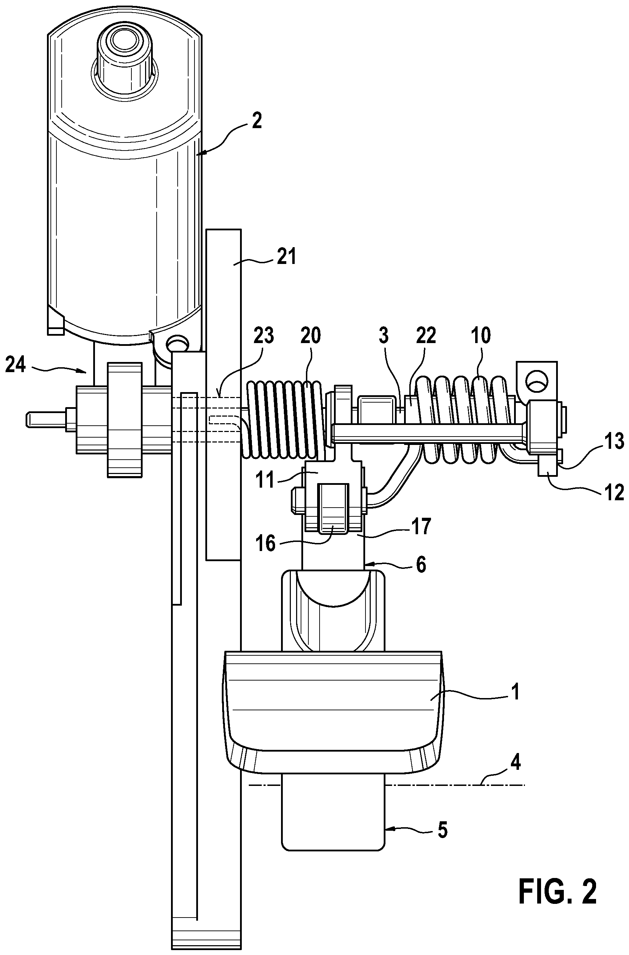

Fig.2 zeigt eine Ansicht von oben auf die erfindungsgemäße Fahrpedaleinheit nach Fig.1.

Bei der Pedaleinheit nach Fig.2 sind die gegenüber der Pedaleinheit nach Fig.1 gleichbleibenden oder gleichwirkenden Teile durch die gleichen Bezugszeichen gekennzeichnet.

Der Aktuator 2 und das Getriebe 24 sind gemäß dem Ausführungsbeispiel auf der dem Fahrpedal 1 abgewandten Seite des Gehäuseabschnitts 21 angeordnet, wobei die Steuerwelle 3 über eine Durchgangsöffnung 23 durch den Gehäuseabschnitt 21 hindurchragt. Beispielsweise ist in der Durchgangsöffnung 23 eine Drehlagerung für die Steuerwelle 3 vorgesehen.

## Patentansprüche

1. Fahrpedaleinheit mit einem Fahrpedal (1), einem Aktuator (2) und einer Steuerwelle (3), über die der Aktuator (2) ein rückstellendes Drehmoment auf das Fahrpedal (1) übertragen kann,
wobei das Drehmoment der Steuerwelle (3) über ein Dämpfungselement (10) auf das Fahrpedal (1) übertragen wird wobei auf der Steuerwelle (3) ein das Drehmoment übertragender Steuerhebel (11) vorgesehen ist, wobei das Dämpfungselement (10) an einem Ende mit dem Steuerhebel (11) und an dem anderen Ende mit der Steuerwelle (3) verbunden ist, wobei zwischen dem Aktuator und dem Fahrpedal ein Getriebe angeordnet ist, **dadurch gekennzeichnet, dass**
eine Stellfeder (20) vorgesehen ist, die mit ihrem einen Ende an einem drehfesten Gehäuseabschnitt (21) befestigt ist und mit dem anderen Ende auf den Steuerhebel (11) wirkt.

2. Fahrpedaleinheit nach Anspruch 1, **dadurch gekennzeichnet, dass** der Steuerhebel (11) auf der Steuerwelle (3) drehbar gelagert ist.

3. Fahrpedaleinheit nach Anspruch 1, **dadurch gekennzeichnet, dass** das Dämpfungselement (10) mit seinem der Steuerwelle (3) zugeordneten Ende an einer mit der Steuerwelle (3) verbundenen Schulter (12) befestigt ist.

4. Fahrpedaleinheit nach einem der vorhergehenden Ansprüche, **dadurch gekennzeichnet, dass** das Dämpfungselement (10) als Schraubenfeder, Torsionsfeder, Biegefeder oder Gummifeder ausgebildet ist.

5. Fahrpedaleinheit nach einem der vorhergehenden Ansprüche, **dadurch gekennzeichnet, dass** das Dämpfungselement (10) mit zumindest einer Windung um die Steuerwelle (3) herum verläuft.

6. Fahrpedaleinheit nach einem der vorhergehenden Ansprüche, **dadurch gekennzeichnet, dass** der Steuerhebel (11) ein drehbar gelagertes Rollelement (16) aufweist.

7. Fahrpedaleinheit nach einem der vorhergehenden Ansprüche, **dadurch gekennzeichnet, dass** der Steuerhebel (11) auf eine Fläche (17) des Fahrpedals (1) einwirkt, die mit einer Beschichtung versehen ist.

8. Fahrpedaleinheit nach einem der vorhergehenden Ansprüche, **dadurch gekennzeichnet, dass** die Stellfeder (20) derart ausgeführt ist, dass sie den Steuerhebel (11) an das Fahrpedal (1) oder in entgegengesetzter Richtung in eine vom Fahrpedal (1) beabstandete Anschlagposition drückt.

9. Fahrpedaleinheit nach einem der vorhergehenden Ansprüche, **dadurch gekennzeichnet, dass** das Dämpfungselement (10) und die Stellfeder (20) jeweils auf einer auf der Steuerwelle (3) drehbar gelagerten Lagerbuchse (22) vorgesehen sind.

## Claims

1. Accelerator pedal unit having an accelerator pedal (1), an actuator (2) and a control shaft (3) via which the actuator (2) can transmit a restoring torque to the accelerator pedal (1), wherein the torque of the control shaft (3) is transmitted to the accelerator pedal (1) via a damping element (10), wherein a control lever (11) which transmits the torque is provided on the control shaft (3), wherein the damping element (10) is connected at one end to the control lever (11) and at the other end to the control shaft (3), wherein a gear mechanism is arranged between the actuator and the accelerator pedal, **characterized in that** an adjusting spring (20) is provided which is fastened by its one end to a rotationally fixed housing portion (21) and acts on the control lever (11) by the other end.

2. Accelerator pedal unit according to Claim 1, **characterized in that** the control lever (11) is rotatably mounted on the control shaft (3).

3. Accelerator pedal unit according to Claim 1, **characterized in that** the damping element (10) is fastened by its end assigned to the control shaft (3) to a shoulder (12) which is connected to the control shaft (3).

4. Accelerator pedal unit according to one of the preceding claims, **characterized in that** the damping element (10) takes the form of a helical spring, torsion spring, bending spring or rubber spring.

5. Accelerator pedal unit according to one of the preceding claims, **characterized in that** the damping element (10) extends around the control shaft (3) with at least one winding.

6. Accelerator pedal unit according to one of the preceding claims, **characterized in that** the control lever (11) has a rotatably mounted rolling element (16) .

7. Accelerator pedal unit according to one of the preceding claims, **characterized in that** the control lever (11) acts on a surface (17) of the accelerator pedal (1) that is provided with a coating.

8. Accelerator pedal unit according to one of the preceding claims, **characterized in that** the adjusting spring (20) is configured in such a way that it presses the control lever (11) onto the accelerator pedal (1) or, in the opposite direction, into a stop position in which it is spaced apart from the accelerator pedal (1).

9. Accelerator pedal unit according to one of the preceding claims, **characterized in that** the damping element (10) and the adjusting spring (20) are each provided on a bearing bushing (22) which is rotatably mounted on the control shaft (3).

## Revendications

1. Unité de pédale d'accélérateur comprenant une pédale d'accélérateur (1), un actionneur (2) et un arbre de commande (3) par le biais duquel l'actionneur (2) peut transmettre un couple de rappel à la pédale d'accélérateur (1),
dans lequel le couple de l'arbre de commande (3) est transmis à la pédale d'accélérateur (1) par le biais d'un élément d'amortissement (10),
dans lequel un levier de commande (11) transmettant le couple est prévu sur l'arbre de commande (3), dans lequel l'élément d'amortissement (10) est relié, à une extrémité, au levier de commande (11) et, à l'autre extrémité, à l'arbre de commande (3), dans lequel une transmission est disposée entre l'actionneur et la pédale d'accélérateur,
**caractérisée en ce qu'**un ressort de réglage (20) est prévu, lequel, par l'une de ses extrémités, est fixé à une partie de boîtier (21) bloquée en rotation et, par l'autre extrémité, agit sur le levier de commande (11).

2. Unité de pédale d'accélérateur selon la revendication 1, **caractérisée en ce que** le levier de commande (11) est monté de manière rotative sur l'arbre de commande (3).

3. Unité de pédale d'accélérateur selon la revendication 1, **caractérisée en ce que** l'élément d'amortissement (10) est, par son extrémité associée à l'arbre de commande (3), fixé à un épaulement (12) relié à l'arbre de commande (3) .

4. Unité de pédale d'accélérateur selon l'une des revendications précédentes, **caractérisée en ce que** l'élément d'amortissement (10) est réalisé sous forme de ressort hélicoïdal, de ressort de torsion, de ressort de flexion ou de ressort en caoutchouc.

5. Unité de pédale d'accélérateur selon l'une des revendications précédentes, **caractérisée en ce que** l'élément d'amortissement (10) s'étend par au moins une spire autour de l'arbre de commande (3).

6. Unité de pédale d'accélérateur selon l'une des revendications précédentes, **caractérisée en ce que** le levier de commande (11) comprend un élément de roulement (16) monté de manière rotative.

7. Unité de pédale d'accélérateur selon l'une des revendications précédentes, **caractérisée en ce que** le levier de commande (11) agit sur une surface (17) de la pédale d'accélérateur (1), laquelle surface est dotée d'un revêtement.

8. Unité de pédale d'accélérateur selon l'une des revendications précédentes, **caractérisée en ce que** le ressort de réglage (20) est réalisé de telle sorte qu'il pousse le levier de commande (11) contre la pédale d'accélérateur (1) ou en sens inverse dans une position de butée espacée de la pédale d'accélérateur (1).

9. Unité de pédale d'accélérateur selon l'une des revendications précédentes, **caractérisée en ce que** l'élément d'amortissement (10) et le ressort de réglage (20) sont prévus respectivement sur une douille de palier (22) montée de manière rotative sur l'arbre de commande (3) .
